(19) Europäisches Patentamt / European Patent Office / Office européen des brevets

(11) **EP 1 154 663 B1**

(12) **EUROPEAN PATENT SPECIFICATION**

(45) Date of publication and mention
of the grant of the patent:
**24.09.2008 Bulletin 2008/39**

(51) Int Cl.:
***H04Q 7/38*** *(2006.01)*

(21) Application number: **00303888.2**

(22) Date of filing: **09.05.2000**

(54) **Improved quality of service control in a mobile telecommunications network**

Verbesserte Steurung der Dienstequalität in einem mobilen Telekommunikationsnetz

Contrôle de qualité de service ameliore dans un réseau de télécommunications

(84) Designated Contracting States:
**DE ES FR GB IT**

(43) Date of publication of application:
**14.11.2001 Bulletin 2001/46**

(73) Proprietor: **Lucent Technologies Inc.**
**Murray Hill, New Jersey 07974-0636 (US)**

(72) Inventors:
• **Gruhl, Stefan**
**90443 Nürnberg (DE)**
• **Lataoui, Omar**
**Rabat (MA)**
• **Rachidi, Tajje-Eddine**
**Nahda,**
**Khouribga 25000 (MA)**
• **Samuel, Louis Gwyn**
**Swindon,**
**Wiltshire SN5 5DQ (GB)**
• **Yan, Ran-Hong**
**Farrington, Oxon SN7 7SS (GB)**

(74) Representative: **Williams, David John et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**WO-A-99/16266**

• **CHAO C -C ET AL: "CONNECTION ADMISSION CONTROL FOR MOBILE MULTIPLE-CLASS PERSONAL COMMUNICATIONS NETWORKS" IEEE JOURNAL ON SELECTED AREAS IN COMMUNICATIONS,IEEE INC. NEW YORK,US, vol. 15, no. 8, 1 October 1997 (1997-10-01), pages 1618-1626, XP000721291 ISSN: 0733-8716**
• **CHENG L: "Quality of services based on both call admission and cell scheduling" COMPUTER NETWORKS AND ISDN SYSTEMS,NL,NORTH HOLLAND PUBLISHING. AMSTERDAM, vol. 29, no. 5, 1 April 1997 (1997-04-01), pages 555-567, XP004059227 ISSN: 0169-7552**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a method of improved quality of service control in a mobile telecommunications network, such as the Universal Mobile Telecommunications System (UMTS) or the Global Packet Radio Service (GPRS) Enhanced Data-rate GPRS Evolution (EDGE), and to apparatus for carrying out the method.

Enhanced second generation and third generation of mobile systems will provide different services to end users, extending the scope of second generation mobile systems from simple voice telephony to complex data applications, for example voice over IP, video conferencing over IP, web browsing, email, file transfer, etc. The use of circuit switched services for Real Time (RT) applications guarantees a high Quality of Service (QoS) but uses the system capacity in a consuming and wasteful manner. This is due to the fact that a dedicated link is maintained throughout the entire lifetime of a connection. On the other hand, packet switched services provide a flexible alternative for RT data traffic over a radio interface as set out by B. Jabbari, E.H. Dinan, W. Fuhrmann, in "Performance Analysis of a Multilink Packet Access for Next Generation Wireless Cellular Systems", PIMRC 1998, in the sense that they use the system capacity more efficiently, allow for user idle time, and adopt a volume charging policy. Moreover packet switching may be more appropriate in scarce resource environments such as that found at the radio interface in mobile communications. This is since additional system capacity may be realized over the air interface by taking advantage of the statistical multiplexing gain inherent in packet switched systems. However maintaining the QoS comparable to that of circuit switched system for RT services is an interesting challenge.

This invention addresses the problems centered on Admission Control of packet data flows with Quality of Service (QoS) requirements. Traditional packet transmission systems operate as queuing systems, where each packet is transmitted at any time. This results in a user perceived system behavior with a low Quality of Service, as the transport network does not maintain certain delay bounds on the data. Novel scheduling mechanisms overcome these limitations, by assigning guaranteed minimum bandwidth to individual flows. Provided that the offered data of one flow does not exceed this guaranteed rate within a given time interval, the user may assume no congestion related delay in such QoS scheduling systems. These assumptions only hold as long as the total offered load associated with QoS enriched flows is lower than the total output capacity of the shared link. Therefore it is necessary to have a system entity which controls the admission of new flows to the system. This entity is called Connection Admission Controller (CAC) and it decides on the admission of new flows. Traditional CAC Algorithms are not designed to handle flows in a highly dynamic environment as found in wireless transmission systems. The present invention specifically addresses these issues.

Broadly speaking, it is possible to divide the types of service of third generation mobiles into two main classes: Real Time services (e.g., voice, video conferencing, etc.), and Non Real Time services (e.g., database applications, web browsing, email, etc.). The UMTS QoS Technical Report, ITU-R (source: Nokia), January 1999 defined four distinct traffic classes, for Universal Mobile Telecommunication Systems (UMTS):

- Real Time classes (Conversational and Streaming)
- Non Real Time classes (Interactive and Background)

Table 1 describes each one of these classes along with their characteristics:

Table 1:

| Class No | Traffic Class | Class Description | Example | Relevant QoS Requirements |
|---|---|---|---|---|
| 1 | Conversational • | Preserves time relation between entities making up the stream • Conversational pattern based on human perception • Real-time | Voice over IP - Video conferencing | - Low jitter - Low delay |
| 2 | Streaming | • Preserves time relation between entities making up the stream • Real-time | - Real-time video | - Low jitter |
| 3 | Interactive | • Bounded response time • Preserves the payload content | - Web browsing - Database | - Round trip delay time |

(continued)

| Class No | Traffic Class | Class Description | Example | Relevant QoS Requirements |
|---|---|---|---|---|
| | | | retrieval | - Low BER |
| 4 | Background | • Preserves the payload content | - Email<br><br>- File transfer | - Low BER |

The traffic classes have QoS attributes associated with them and these attributes include the following facets:

1. The traffic characteristics specified in terms of bandwidth:

- The peak rate (bit/sec),
- The minimum acceptable rate (bit/sec),
- The average rate (bit/sec),
- The maximum burst size (the maximum number of consecutive bits sent at the peak rate.)

2. The reliability requirements of the connection. These include:

- The Bit Error Rate (BER) or Frame Error Rate [FER],
- The maximum loss ratio (the proportion of received packets to undelivered packets),

3. The delay requirements including:

- The maximum tolerated delay (ms),
- The maximum tolerated jitter (ms) (the variation in delay).

This top-level of traffic class classification can support many QoS decisions without the need to examine closely the set of QoS attributes. For example conversational traffic could get no backward error correction assigned exclusively based on its traffic class characterization.

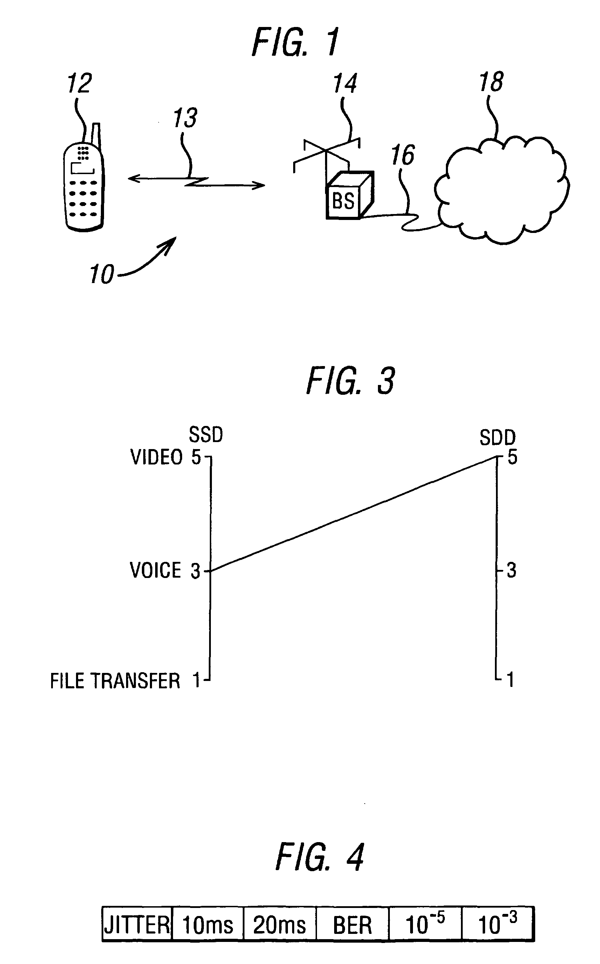

Each traffic class is characterized by a set of QoS requirements that needs to be satisfied in an end-to-end mode. That is, both the wireless and the fixed subsystems that make up a mobile environment (see figure 1) need to implement structures responsible for providing and maintaining the required QoS.

Many QoS requirements such as guaranteed bandwidth can be achieved for individual data flows by appropriate scheduling strategies. These systems make one major assumption, which is: *"The total offered traffic load to the scheduling system is lower than the output capacity."* Thus the amount of accepted load in the system has to be controlled and is critical for the successful implementation of QoS scheduling. For wireless systems there are two special problems. Mobility of users among different radio cells results in dynamic load patterns in individual cells, and changing radio propagation conditions result in varying capacity for individual links. Thus the amount of offered load (of already accepted calls) and the output capacity vary. Besides these technical problems there is usually the economic desire to achieve high network utilization. A conservative CAC will possibly reject more load than what might have been acceptable.

It is an object of the invention to provide a method and apparatus which permits more efficient use of bandwidth, improvement of end to end service quality, and improvement of load balancing in the network.

A paper which provides background is CHAO C -C ET AL: "CONNECTION ADMISSION CONTROL FOR MOBILE MULTIPLE-CLASS PERSONAL COMMUNICATIONS NETWORKS" IEEE JOURNAL ON SELECTED AREAS IN COMMUNICATIONS, IEEE INC. NEW YORK, US, vol. 15, no. 8, 1 October 1997 (1997-10-01), pages 1618-1626, XP000721291 ISSN: 0733-8716.

It is known from the above-mentioned paper by Chao et al to provide a method of determining whether to make a requested call connection between a telecommunications cell of a wireless mobile telecommunications network, and a mobile user terminal by providing for a requested call a quality of service descriptor specific to that call, determining whether the required quality of service can be provided and making that call connection only when the required quality of service can be provided.

The present invention is characterised over the disclosure of the above-mentioned paper by Chao et al. by each call having a quality of service descriptor which comprises a service degradation descriptor (SDD) which specifies acceptable limits in degradation of quality of service, the method including predicting whether making the call connection would provide a degradation in quality of service to existing calls within the limits defined by the service degradation descriptors of the existing calls and making the call connection only if degradation to existing calls within the limits is predicted according to claim 1.

Also according to the invention, a network according to Claim 5 in which the connection admission controller comprises a Boolean decision maker and a connection impact evaluator arranged to assess the impact of accepting a requesting call into an active telecommunications cell.

The invention will now be described by way of example only with reference to the accompanying drawings in which:-

Figure 1 illustrates schematically a UMTS network;
Figure 2 illustrates Quality of Service architecture in the UMTS system;
Figure 3 illustrates a Seamless Service Descriptor and Service Degradation Descriptor values;
Figure 4 illustrates a sample loss profile;
Figure 5 illustrates Quality of Service management structure components in the arrangement of the invention;
Figure 6 illustrates a sample connection status table;
Figure 7 illustrates the general structure of a connection admission controller
Figure 8 illustrates the decisions made in a connection admission controller according to the invention;
Figure 9 illustrates the interaction of a scheduler with standard Quality of Service management components, in addition to the inventive arrangement;
Figure 10 illustrates the time intervals between RLCs and packets of the same connection.

In Figure 1, a mobile telecommunications network 10, specifically the UMTS, comprises a Mobile Terminal (MT) 12 which communicates over an air interface 13 with a Base Station (BS) 14 which has a fixed connection 16 to a fixed network subsystem 18, which may be either an IP (Internet Protocol) network or the PSTN (Public Switched Telephone Network).

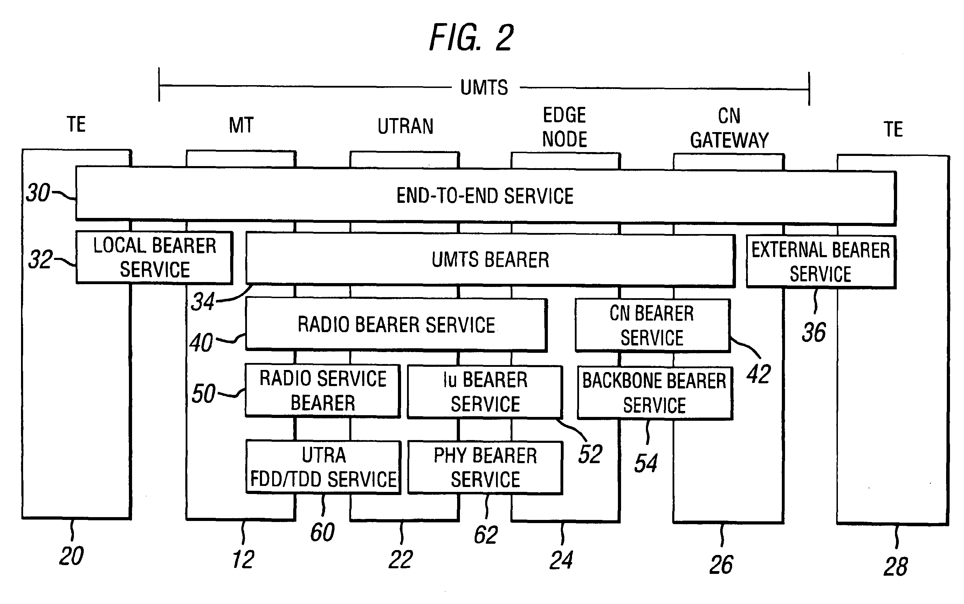

The QoS (Quality of Service) architecture can be represented as in Figure 2, as a functional decomposition; QoS can be treated as a series of "chained services" operating at different levels; such an approach is suggested in Technical Specification Group Services and System Aspects, QoS Concept version 1.1.0, 3GPP, 1999.

In UMTS, Terminal Equipment (TE) 20 can be connected to an MT 12; the BS 14 forms part of a UTRAN (Universal Terrestrial Radio Access Network) 22 which is connected through an Edge node 24 and Core Network (CN) Gateway 26 to a further TE 28.

The end to end QoS service 30 can be regarded as made up, at a first level, of a Local Bearer Service 32, between the TE 20 and MT 12; UMTS Bearer Services 34 between MT 12 and CN Gateway 26; and External Bearer Service 36 between CN Gateway 26 and TE 28.

At a second level, the UMTS Bearer Services 34 are made up of Radio Bearer Services 40 between the MT 12 and the Edge Node 24, and a CN Bearer Service 42 between the Edge Node 24 and the CN Gateway 26. At a third level the Radio Bearer Service 40 is made up of a Radio Service Bearer 50 between MT 12 and UTRAN 22, and Iu Bearer Services 52 between UTRAN 22 and Edge Node 24. At this level, the CN Bearer Service 42 is a Backbone Bearer Service 54.

At a fourth level there is a UTRA (U... T... R... A...) FDD/TDD (F... D... T.../T... D... D...) Service 60 between MT 12 and UTRAN 22, and a Physical Bearer Service QoS 62 between the UTRAN 22 and Edge Node 24.

In this specification, most of the QoS terms used are based on Traffic Management Specification, Version 4.0, The ATM Forum, Technical Committee, aftm-0056.000, April 1996; in addition the term "loss profile", a wireless-specific QoS parameter, is described by S Singh, "Quality of Service Guarantees in Mobile Computing, Computer Communications", Vol 19, pp 359-371, 1996. However, in contrast to QoS for ATM (Asynchronous Transfer Mode) systems, in the arrangement according to the invention, QoS maintenance is not only adaptive, but it is maintained throughout the lifetime of a connection.

In the description of a specific embodiment of the invention which follows, the assumptions made are that:-

1. All QoS transmissions have to be embedded into a data flow. A data flow is a sequence of data packets from the same source to the same destination in the network, for which the user has certain QoS requirements. Each radio bearer is related to a single data flow. Because multiple radio bearers might be established for a single user, multiple data flows could exist simultaneously that are related to a single user, too. In the following all data flows are handled separately.

2. Each Connection Request (CR) contains QoS requirements. The QoS requirements contain three parts. The first part (A) is a top-level classification. If not explicitly given this classification can be derived from actual values from B, e.g. from the delay requirements. The quantification of such conversion table is out of scope for this proposal. Part B contains basic traffic specifications in means of bandwidth, delay and reliability. The third part (C) is wireless specific and deals with the question of how to deal with the flow in case of network congestion situations, mostly due to link degradation. It is assumed that each CR is specified with the parameters for B and C. If these are not explicitly notified in a CR, it is assumed that it is possible to assign appropriate values to the unspecified fields.

3. The variable link is assumed to be part in a multi-hop packet routing architecture and to be the only bottleneck, where potentially congestion situations may occur. This is justified by the assumption that a fixed link backbone network with the same bandwidth capacity compared to a wireless network is relatively cheaper to build. Therefore in our expected application field the network operator will make sure during the network planning that enough (cheap) backbone capacity is available to support the relatively expensive wireless network.

4. Because a rate conserving scheduling strategy is used in the scheduler, the scheduler guarantees the required data rates, as long as the scheduling system is not congested. This is the case as long as the total offered load is lower or equal than the available effective throughput within a given monitoring interval.

According to the present invention, two novel service descriptors are required, both of which permit the description by a user of a requested service in terms suited to the characteristics of a wireless interface.

The first descriptor is a Seamless Service Descriptor (SsD) by which a user specifies the level of service which the user requires during a handover from one telecommunications cell to another. For simplicity this may be exemplified by integer granularity on a scale of 1 to 5; an SSD value of 5 means the highest quality of seamless service, such as that required for video handover; for video a service of quality 4 may be tolerable but an SSD value of 3 or less would render a video service unwatchable.

For a voice service, an SSD value of 3 will probably be acceptable, because the human brain is capable of interpolation to smooth out errors of transmission.

For a service such as file transfer, when real time transfer is not essential, an SSD of 1 would be acceptable.

Figure 3 illustrates the three examples just given.

Naturally, a user will be required to pay more for the higher SSD levels.

A second descriptor, a Service Degradation Descriptor (SDD) allows a user requesting a new link also to specify the level of service degradation, and the type of degradation, which a user is prepared to permit. On the integer scale of 1 to 5 the descriptor defines the level by which the user will tolerate degradation; for example, the voice user may not be prepared to tolerate any loss, so SDD = 5, see Figure 4.

The SDD is based on a loss profile, such as that set out by S Singh," Quality of Service Guarantees in Mobile Computing, Computer Communications", Vol 19, pp 359-371, 1996.

Suppose there is resource deterioration, e.g. a decrease in the quality of the air interface so that radio link capacity is reduced. The question may be asked, should payload be preserved at the expense of jitter requirements?

Figure 4 shows a typical loss profile for a connection and specifies that, as a first step, jitter may be increased from ten milliseconds to twenty milliseconds, then as a second step in degradation, BER (Bit Error Rate) may be increased from $10^{-5}$ to $10^{-3}$.

Thus SDD specifies how, when a resource insufficiency occurs, the QoS requirements of that particular call may be degraded.

A fourth element which is specified is the Policer Flag by which the user indicates how the system may react if that user exceeds his allocated bandwidth; the concept of a Policer Flag is known in ATM systems.

The four elements Seamless Service Descriptor, Service Degradation Descriptor, Loss Profile and Policer Flag are all specified in a Connection Request (CR) which is issued for each application which is requesting a wireless link, in both the uplink and the downlink, and regardless of the transport scheme used, which may be TCP (Transport Control Protocol), UDP (User Data Protocol) etc.

On the basis of the Connection Request, the network makes a decision whether to accept or reject the request, depending on whether sufficient capacity is available to provide the service, and on whether supplying the requested service will affect current connections to an unacceptable degree, i.e. to go beyond the SSD and/or SDD descriptors of these current connections.

Also, when a service to be handed over is not robust, such as a video service, a request may be made for bandwidth within the target cell; the SSD functionality allows an incoming, high value SSD service to "borrow" bandwidth from a lower value SSD service already within the cell, so that quality can be maintained on handover.

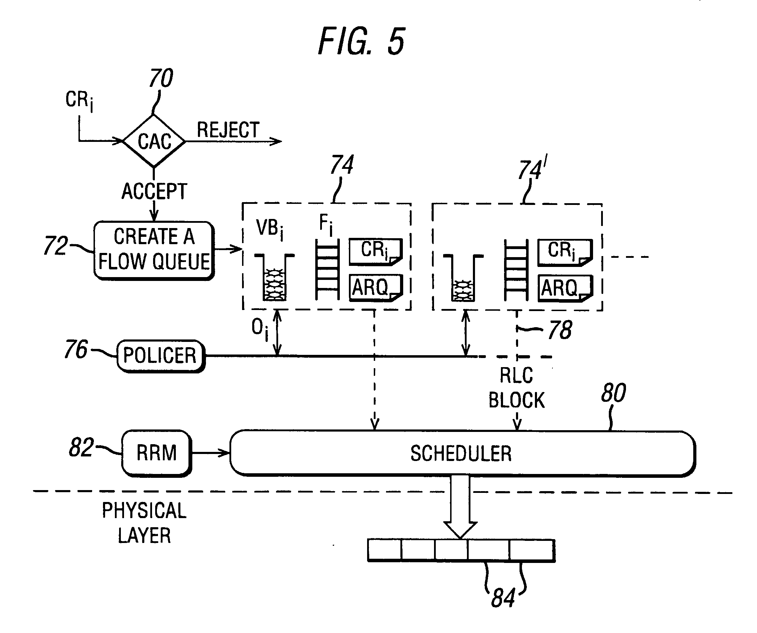

The decision is made by a QoS management structure, the components of which are shown in Figure 5. The components are viewed as logical entities, that is, the location is not indicated. The structure may be located in the MT 12, in a BS 14, or in both.

The Connection Request $CR_i$ is supplied to a Connection Admission Controller (CAC) 70 which accepts or rejects the request, as set out above. For an accepted request, the CAC 70 generates a "create flow queue" message 72, and a queue 74 of variable size is set up in the network layer for each $CR_i$. Each queue comprises a variable size leaky bucket $VB_i$ with variable flow rate $F_i$.

The output $O_i$ of the bucket is monitored by the policer 76. Subsequently, as illustrated at 74', the RLC (Radio Link Control) protocol is initialized, as indicated at 78, and RLC blocks are passed to a scheduler 80 which also receives input from a Radio Resource Manager (RRM) 82. The scheduler 80 serves each flow queue depending on its QoS requirements, setting up Transport Frames (TF) 84.

Referring again to the queue 74, flows with BEC (B... E... C...) find that their ARQ (Automatic Repeat Requests) is set up and this is used for retransmission of lost or erroneous blocks. (The ARQ process for real time traffic classes will, in general, be void).

The components comprising the QoS management structure are the CAC 70, the policer 76 and the scheduler 80.

Considering now the CAC 70, the basic principle of a CAC is to collect a certain number of Connection Requests (CRi) from flow i, i=1..n, where n constitutes the total number of already accepted and living flows. A flow is alive until the network or the user has terminated an established flow.

A CR contains a set of QoS requirements, which builds the basis for the CAC algorithm to decide how much system resources this flow will potentially require. The CAC decision upon acceptance is thus driven by the question, if system resources will be sufficient to satisfy all existing plus the newly considered flow. Conservative CAC algorithms will do so if the probability of this decision is 100% proof. To increase link utilization many approaches aim for a CAC behavior which achieves probabilistic guarantees, such as guarantees which hold for 55 minutes during an operating hour. These schemes are also referred to as over-reservation schemes. Given that the inventive usage of the parameter Loss Profile and the novel parameter SDD are probabilistic metrics, it is assumed that over-reservation is used and/or temporarily accepted during operation.

From a service provider point of view, the main goal of the CAC module is to admit a maximum number of CRs, and, at the same time, maintain the QoS requirements of existing connections. That is, the CAC module should avoid congestion in advance. In addition to this, independent from its actual implementation, the final output of the CAC module must be a Boolean value indicating whether the CR should be admitted or not.

The CAC module receives a Connection Request (CR) from an application, network measures (multipath, path loss, and interference) from the Radio Resource Manager (RRM), and the traffic characteristics along with the QoS requirements of all existing connections from the serving Base Station. It then decides, based on the previous information, whether the CR can be accepted or not. The CR can be originated either from a new call or from a handoff. The CAC module should prioritize handoff CRs over new call CRs because, in general, interrupting a service in an active connection is more annoying to users than rejecting a new call.

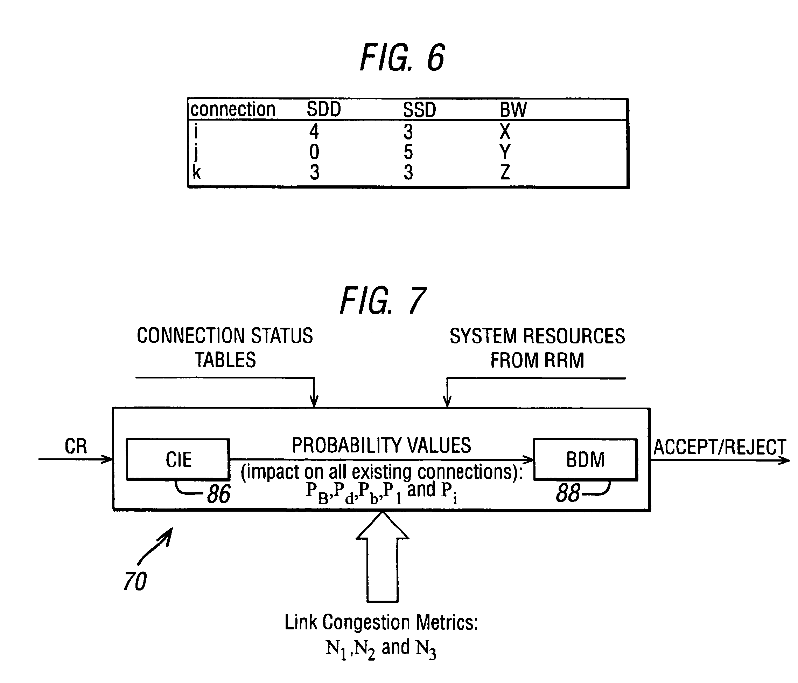

Besides local capacity estimates, CAC for wireless traditionally focuses on resource reservation for hand-off calls, which can lead to both extensive signaling overhead between base stations and low link utilization due to pessimistic admission strategies. The Connection Admission Controller of the invention is not based on inter-cell resource reservation to guarantee a seamless service. Rather it uses the two new QoS parameters that are introduced (the SDD and the SSD) to either accept or reject an incoming request. In this model, each BS needs to maintain a table (a Connection Status Table) containing the connection identifier, SDD, SSD, and the total virtual bandwidth used by each connections within the current cell. Figure 6 shows an example of a Connection Status Table.

The general structure of the CAC 70 is shown in Figure 7. It has two main parts, a Connection Impact Evaluator (CIE) 86 and a Boolean Decision Maker (BDM) 88.

The CIE: takes as input the following parameters:

- The actual Connection Request,
- The available system resources (bandwidth and memory), of both the current cell and the neighboring cells, form the RRM,
- The Connection Status Tables, of both the current cell and the neighboring cells.

Obviously, a protocol for exchanging information on existing connections between neighbor BSs at regular intervals needs to be specified.

The CIE then outputs a set of probabilistic values predicting the impact of admitting the requesting connection on all existing active connections in the current and neighboring cells. Those probabilities are divided into two categories:

- The probability values of *blocking n* other active connections $P_B(n)$ in the current and neighboring cells. For example, a $P_B(1) = 0.3$ means that there is a probability of 0.3 of blocking one active connection.
- The probability of *degrading* the QoS of *n* other active connections in neighboring cells:

  - Probability of exceeding the delay requirement $P_d(n)$
  - Probability of exceeding the jitter requirement $P_J(n)$
  - Probability of exceeding the BER requirement $P_b(n)$
  - Probability of exceeding the loss requirement $P_l(n)$

The *BDM* is the module that decides whether or not the CR is to be accepted. It is regulated by the probabilities issued from the CIE and a set of congestion metrics (the number of connection blocking $N_1$, the number of QoS degradation due to congestion $N_2$, and the length of queues and buffers at the edge of the network $N_3$.) One of the goals that the BDM needs to achieve is that its blocking and service degradation probabilities should be less than the natural blocking and degradation probabilities if no CAC is implemented.

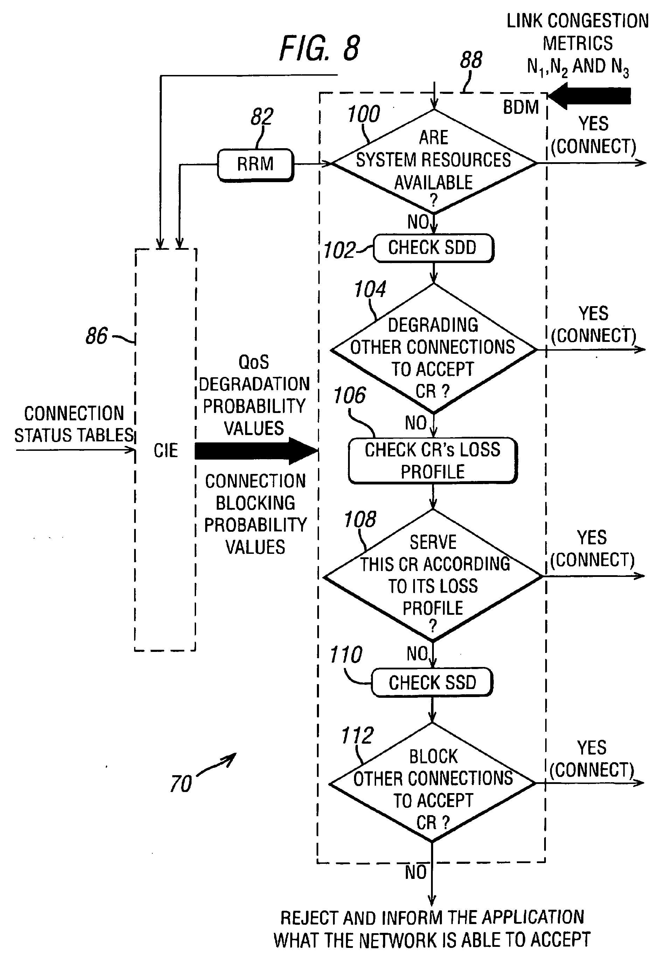

Figure 8 shows in detail the decisions made by the CAC 70.

The input from the RM 82 and the other connections into the CIE 86 can be regarded as taking into account the Radio Bearer Services 40 and 50 in Figure 2, and the Link Congestion metric inputs can be regarded as taking into account the Iu Bearer Services 52, the Backbone Bearer Service 54 and the CN Bearer Service 42 in Figure 2. Thus the whole breadth of the UMTS Bearer Service 34 is covered and in effect the end-to-end service 30 can be improved.

On receipt of a call request CR, and with input from the RRM 82, in step 100 a decision is taken "are system resources available?". If yes, connect; if no, the SDD is checked in step 102; in step 104, a decision is taken as to whether existing connections are prepared to accept a predicted degradation to allow the new call. If yes, then connect. If no, in step 106 the loss profile of the CR is checked by the CAC 70 (Figure 7). In step 108, if this CR can be served according to its loss profile, connect; if not, the SSD is checked in step 110. In step 112, if it would block other connections to accept this CR, but the other connections can be stopped and restarted without ill effect, ie if we can "steal" bandwidth, then the CR is accepted; if not, the CR is rejected and the application is informed that the network is unable to accept the request.

On acceptance, a new flow queue is created and a connection identifier is assigned to all packets which are issued for that connection.

As an example, a CR can be rejected, even if system resources are available, if the CIE 86 outputs a high blocking probability value, and the congestion metrics indicate an increasing number of blocked connections.

Although a specific CAC entity has been described, a distributed version would beneficially spread the required computational power to several units, and lower the response time to a request.

Consider now the policer 76 in Figure 5. In a network where different connections are competing for resources, a policing mechanism is suited to monitor traffic sources, if they behave in compliance with their own specifications. Furthermore a policer can interact and alter the offered load in order to make it flow compliant. In the present approach both actions are foreseen, while it is left to the user to select the operation mode.

In this application, a simple policer operating at the data link layer of the BS is described. Obviously its location can also be shifted e.g. to the gateway entry of the core network. The policer monitors and enforces the traffic characteristics (peak rate, average rate, and burstiness) of a given flow queue based on a token-based leaky bucket algorithm.

The peak rate of a flow is controlled by simply comparing the bit inter-arrival time with the inverse of the peak rate specified when the Connection Request was issued. The bit inter-arrival time must be less than the inverse of the peak rate for a conforming traffic. The average rate is enforced by setting the leaky bucket's token arrival rate to the agreed upon average rate. Note that "bit inter-arrival time" underlines that this is a volume dependent view and not done on a per packet basis.

It can easily be shown that the burstiness can be controlled by adjusting the size of the leaky bucket. Burstiness is the maximum number of consecutive bits sent at the peak rate. The size of the token-based leaky bucket can be set in order to enforce the agreed burstiness:

For a given traffic, the size of the leaky bucket should be set to:

$$Size = \left(1 - \frac{Average\ Rate}{Peak\ Rate}\right) \times Burstiness \qquad (1)$$

provided that the Average Rate is strictly smaller than the Peak Rate. If the average rate is equal to the peak rate, then the burstiness is not defined. This makes sense since the definition of the burstiness is the maximum number of consecutive bits that can be sent at the *Peak* rate.

Concerning the action to be taken by the policer with regard to connections not conforming to the agreed upon traffic characteristics, the policer examines the "Policer Flag" specified within the connection request. If the Policer Flag is ON, this means that the user is willing to pay extra charges (according to a billing policy defined by the service provider) for the transmission of non-conforming packets (provided enough system resources are available). If, however, the Policer Flag is OFF, then the policer discards all non-conforming packets.

On connection of a call, the network guarantees the user requirements as to delay, jitter and a bandwidth. The ease with which these requirements can be met depends on external conditions, primarily the air interface. The network may need to vary the proportion of data and protection if the interface deteriorates, i.e. it may need to vary the bandwidth. Similarly, deterioration of the air interface may cause a concertina effect, ie the proportion of raw data within a packet is decreased.

It is the scheduler 80 (see Figure 5) which takes these factors into account.

Considering first the arrangements in the prior art, for the application to UMTS a scheduler is responsible for the order of transmission of different RLC blocks within a transport frame. It is configured from Radio Resource Manager (RRM), located at the BS, with a set of Transport Format Combinations (TFC) which have been assigned during resource allocation to the flow. Each Transport Format (TF) is characterized by at least a coding scheme and its corresponding number of bits that can be transmitted. The scheduler chooses one TF that would optimize the link utilization and, at the same time, satisfy the QoS requirements of all flow queues belonging to different traffic classes.

Different scheduling schemes may apply, depending on the traffic direction. For wireless systems, as e.g. UMTS, there is one scheduling method on the dedicated shared channel, where the MS transmits in the uplink direction over the air interface whenever it has data to send. In GPRS the MS has to perform an access procedure and its UL data is actively scheduled and signalled to the MS from the central BS. In the downlink for all known system the BS synchronises all RLC blocks and sends data at regular intervals.

In the present invention, the scheduler is applied in a rate conserving manner to implement the QoS bandwidth requirements, that is, the scheduler monitors and grants access to the shared link to the individual data flows in proportion to their specified bandwidth requirements. The actual scheduling scheme is not relevant.

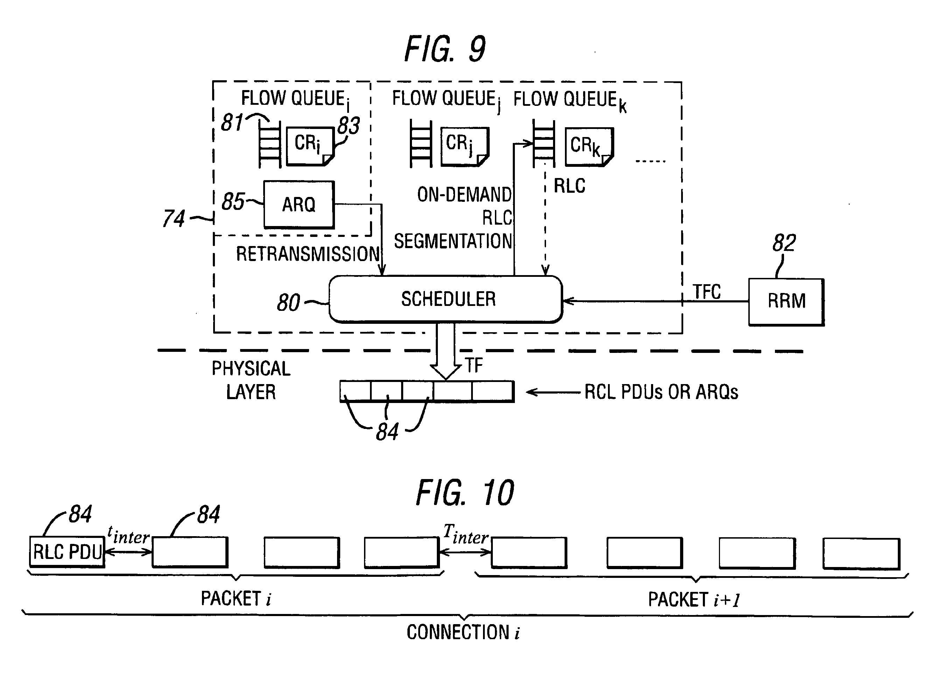

Figure 9 illustrates the interaction with standard QoS management components. The inventive arrangement with a variable queue 81, a CR 83 and an ARQ 85 interacts with the scheduler 80. The scheduler 80 also interacts with standard queues j and k each having a Connection Request CRj, CRk. The output of the scheduler is a stream of RLC blocks 84, which may be PDUs or ARQs.

For the scheduler to meet all existing flow queues (the performance requirements of the scheduler), the QoS requirements are:

- *RT Traffic Classes*: characterized by the following QoS requirements (relevant to the scheduler):

  - The maximum tolerable delay: *Dmax*, which is the maximum tolerable time it takes for a Network Layer Packet to be transmitted,
  - The maximum tolerable jitter: *Jmax,* which is the maximum tolerable variation in packet delay, and
  - The Packet Loss Ratio.

Assumption 3 above focuses on delay issues for the particular scheduling system. It is assumed that there is no significant additional delay caused by the backbone network. Of course this influence may be estimated or signaled by some future QoS mechanism. If the influence of the backbone is available it will be subtracted from the flow requirements first and the new constraints will become tighter for our scheduler.

In Figure 10, let $t_{inter}$ be the time interval between two consecutive RLC transmissions 84 belonging to the same packet, and let $T_{inter}$ be the time interval between the last RLC of packet *i* and the first RLC of packet *i+1* for the same connection.

Also let $D_i$ be the packet delay for a given packet i. So, $D_i = T_{inter} + \Sigma t_{inter.}$ That is, in order to meet the delay requirement for a RT flow, the scheduler 80 must maintain the following inequality true: $T_{inter} + \Sigma t_{inter} \leq Dmax.$

In addition to this, the scheduler 80 must also meet the jitter requirement for a RT flow. That is, $D_{i+1} - D_i \leq Jmax.$ Note that $D_i+1 - D_i$ can be negative, assuming that a given packet can be buffered at the destination to maintain a small delay variation. Consequently, the scheduler needs to adjust the values of $t_{inter}$ in order to meet both delay and jitter requirements.

The loss ratio specified in the flow queue specifies the fraction of packets that can be delayed over the maximum tolerable delay (considered lost.)

- *NRT Traffic Classes*. Characterized by the following QoS requirements (relevant to the scheduler):

  - Maximum tolerable delay: *Dmax* (class #3 only), and
  - Bit Error Rate: BER (classes #3 and #4)

By adopting the previous terminology, the scheduler needs to maintain the following inequality true for traffic class #3 flows: $T_{inter} + \Sigma t_{inter} \leq Dmax.$

In order to meet the BER requirement, the scheduler needs to choose a TF having a coding scheme that maintains the required BER. Note that lost packets for NRT classes are retransmitted using an ARQ process, making the PHY-link BER requirements an optimisation process, not covered here.

The scheduler 80 may find itself in congestion situations due to several reasons. The system may be overloaded by aggressive CAC strategies or unexpected Handoffs into the cell under consideration. Also the estimated transmission capacity might be overestimated. This can happen when links degrade in quality and more systems resources are required to achieve the former effective throughput.

Several stages of load balancing in case of a congestion situation are proposed: Firstly marked packets by the policer from flows with non-flow compliant behaviour are discarded. Then if the system resources are still limited, the scheduler initiates a RRM procedure to alter some flow requirements. The exact procedure is out of scope here. Basically it will base its decision on the loss profile of individual flows and find a flow that is suited to be degraded. This degraded parameters will then be notified back to the scheduler. This is repeated until the scheduler find itself in not congested anymore. When the situation is stable the former degraded flows are restored in a reverse manner. If possible this mechanism also informs (via a control plane) the corresponding application of the changes in QoS terms.

In the invention the inherent characteristics of the air interface of a mobile wireless packet switched transmission system are taken into account when considering the QoS for traffic flows across the air interface. This is since the SSD, SDD and LP together realistically reflect the achievable QoS for a wireless service. There are specifically two occasions where the achievable QoS temporarily alters. During normal operation with no handover scenarios the available capacity may change substantially due to altered radio conditions for individual links. This reduced link capacity may yield scheduling congestion situations. For handover/handoff scenarios there might be additional load, which cannot be easily rejected by Admission Control mechanisms, as it is generally not desired to cut of existing flows. These additional load may also cause congestion situations. In the case of Handoffs this amounts to an improvement on existing solutions because existing solutions reserve bandwidth in neighboring cells in order that handovers/handoff are smooth for RT services. This method while robust reduces the capacity of the system moreover in Third Generation (3G) systems there is the added complication of having ongoing variable bandwidth demands at the time of handover. Under this circumstance the overhead of reserving bandwidth to guarantee the QoS at handover becomes costly in terms of cell capacity. Therefore having a method which takes into account the demands of new connections in a highly flexible manner would be highly desirable since cell capacity would be used in a more effective manner. Moreover the invention can be applied in a general sense to packet switched services since the policing and scheduling elements take care of the traffic behavior either side of a handover/hand -off. Finally the invention allows for more aggressive over-reservation of system resources hence a higher network utilization, because it is possible to overcome potential congestion situations in such manner, that the affected services are degraded in such way that this is still acceptable for the users.

While the invention has been described with reference to the UMTS, it is applicable to any enhanced second generation or third generation mobile telecommunications system.

## Claims

1. A method of determining whether to make a requested call connection between a telecommunications cell of a wireless mobile telecommunications network and a mobile user terminal by providing for a requested call a quality of service descriptor specific to that call, determining whether the required quality of service can be provided and making that call connection only when the required quality of service can be provided, **characterised by** each call having a quality of service descriptor which comprises a service degradation descriptor (SDD) which specifies acceptable limits in degradation of quality of service, the method including predicting whether making the call connection would provide a degradation in quality of service to existing calls within the limits defined by the service degradation descriptors of the existing calls and making the call connection only if degradation to existing calls within the limits is predicted.

2. A method according to Claim 1 in which the service degradation descriptor (SDD) specifies acceptable limits in increase in jitter and increase in bit error rate, and the order in which such increases are to be applied.

3. A method according to any preceding claim in which there is also provided a second quality of service descriptor specific to each requested call comprising a seamless service descriptor (SSD) which specifies quality of service for that call during a handover from one telecommunications cell to another.

4. A method according to Claim 3 in which the seamless service descriptor specifies quality of service on handover by specifying bandwidth requirements.

5. A wireless mobile telecommunications network comprising a core network, a plurality of base stations (14) and a plurality of mobile terminals (12), there being a connection admission controller (70), a policing unit (70) and a scheduler (80), and means to specify at least one quality of service descriptor specific to a requesting call, the connection admission controller (70) being arranged to accept the requesting call only when the quality of service in the descriptor can be provided, **characterised in that** each quality of service descriptor comprises a service degradation descriptor (SDD) which specifies acceptable limits in degradation of quality of service, and **in that** the connection admission controller (70) is operative to predict whether making the call connection would provide a degradation in quality of service to existing calls within the limits defined by service degradation descriptors (SDD) of existing calls and to make that call connection if degradation to existing calls within the limits is predicted.

**6.** A network according to Claim 5 in which the connection admission controller (70) comprises a Boolean decision maker (88) and a connection impact evaluator (86) arranged to assess the impact of accepting a requesting call into an active telecommunications cell.

**Patentansprüche**

**1.** Ein Verfahren zum Ermitteln, ob eine angeforderte Rufverbindung zwischen einer Telekommunikationszelle eines mobilen drahtlosen Telekommunikationsnetzes und einem mobilen Endgerät durch Bereitstellen für einen angeforderten Ruf eines für diesen Ruf spezifischen Dienstgüte-Deskriptors herzustellen ist, wobei ermittelt wird, ob die geforderte Dienstgüte bereitgestellt werden kann, wobei die Rufverbindung nur hergestellt wird, wenn die geforderte Dienstgüte bereitgestellt werden kann, **dadurch gekennzeichnet, dass** jeder Ruf einen Dienstgüte-Deskriptor hat, welcher einen Dienstverminderungs-Deskriptor (SDD), der zulässigen Grenzen der Verminderung der Dienstgüte spezifiziert, enthält, wobei das Verfahren das Vorhersagen umfasst, ob das Herstellen der Rufverbindung eine Verminderung der Dienstgüte der bestehenden Zellen in den von den Dienstverminderungs-Deskriptoren definierten Grenzen der bestehenden Rufe verursachen würde, und **dadurch**, dass die Herstellung der Rufverbindung nur erfolgt, wenn vorhergesagt wird, dass die Verminderung der bestehenden Rufe innerhalb der Grenzen bleibt.

**2.** Ein Verfahren nach Anspruch 1, wobei der Dienstverminderungs-Deskriptor (SDD) die zulässigen Grenzen für die Erhöhung der Schwankungsbreiten und für die Erhöhung der Bitfehlerrate sowie die Reihenfolge, in welcher solche Erhöhungen erfolgen sollen, spezifiziert.

**3.** Ein Verfahren nach einem beliebigen der vorstehenden Ansprüche, wobei ebenfalls ein zweiter Dienstgüte-Deskriptor für jeden angeforderten Ruf vorgesehen ist, welcher einen Makellos-Dienst-Deskriptor (SSD) umfasst, der die Dienstgüte für diesen Ruf während eines Handovers von einer Telekommunikationszelle zu einer anderen spezifiziert.

**4.** Ein Verfahren nach Anspruch 3, wobei der Makellos-Dienst-Deskriptor die Dienstgüte bei Handover durch Spezifizieren der Bandbreitenanforderungen spezifiziert.

**5.** Ein mobiles drahtloses Telekommunikationsnetz, welches ein Kernnetzwerk, eine Vielzahl von Basisstationen (14) und eine Vielzahl von mobilen Endgeräten (12) umfasst, wobei ein Verbindungszulassungs-Kontroller (70), eine Kontrolleinheit (70) und ein Steuerprogramm (80) sowie Mittel zum Spezifizieren von mindestens einem für einen anfordernden Ruf spezifischen Dienstgüte-Deskriptor vorgesehen sind, wobei der Verbindungszulassungs-Kontroller (70) so ausgeführt ist, dass er den anfordernden Ruf nur akzeptiert, wenn die in dem Deskriptor angegebene Dienstgüte bereitgestellt werden kann, **dadurch gekennzeichnet, dass** jeder Dienstgüte-Deskriptor einen Dienstverminderungs-Deskriptor (SDD) umfasst, welcher die zulässigen Grenzen der Verminderung der Dienstgüte spezifiziert, und **dadurch**, dass der Verbindungszulassungs-Kontroller (70) fähig ist, vorherzusagen, ob das Herstellen der Rufverbindung eine Verminderung der Dienstgüte der bestehenden Zellen in den von den Dienstverminderungs-Deskriptoren (SDD) definierten Grenzen der bestehenden Rufe verursachen würde, und **dadurch**, dass die Herstellung der Rufverbindung nur erfolgt, wenn vorhergesagt wird, dass die Verminderung der bestehenden Rufe innerhalb der Grenzen bleibt.

**6.** Ein Netzwerk nach Anspruch 5, wobei der Verbindungszulassungs-Kontroller (70) einen Booleschen Entscheider (88) und einen Verbindungsbeeinflussungs-Bewerter (86) umfasst, welcher fähig ist, die Auswirkungen des Akzeptierens eines anfordernden Rufs auf eine aktive Telekommunikationszelle zu beurteilen.

**Revendications**

**1.** Procédé permettant de déterminer s'il faut établir une connexion d'appel demandée entre une cellule de télécommunication d'un réseau de télécommunication mobile sans fil et un terminal utilisateur mobile en fournissant à un appel demandé un descripteur de qualité de service spécifique à cet appel, en déterminant si la qualité de service requise peut être fournie et en effectuant cette connexion d'appel seulement quand la qualité de service nécessaire peut être fournie, **caractérisé en ce que** chaque appel ayant un descripteur de qualité de service qui comprend un descripteur de dégradation de service (SDD) qui spécifie les limites acceptables dans la dégradation de la qualité de service, le procédé incluant la prévision consistant à savoir si le fait d'établir la connexion d'appel apporterait une dégradation dans la qualité de service des appels existants dans les limites définies par les descripteurs de dégradation de service des appels existants et d'établir la connexion d'appel seulement si la dégradation des appels existants dans les limites est prévue.

**2.** Procédé selon la revendication 1 dans lequel le descripteur de dégradation de service (SDD) spécifie les limites acceptables de l'augmentation de la gigue et de l'augmentation du taux d'erreurs sur les bits, et l'ordre dans lequel ces augmentations doivent être appliquées.

**3.** Procédé selon l'une quelconque des revendications précédentes dans lequel il est également fourni un second descripteur de qualité de service spécifique à chaque appel demandé comprenant un descripteur de service sans couture (SSD) qui spécifie la qualité de service pour cet appel pendant un transfert intercellulaire d'une cellule de télécommunication à une autre.

**4.** Procédé selon la revendication 3 dans lequel le descripteur de service sans couture spécifie la qualité de service et un transfert intercellulaire en spécifiant des exigences de bande passante.

**5.** Réseau de télécommunication mobile sans fil comprenant un réseau dorsal, une pluralité de stations de base (14) et une pluralité de terminaux mobiles (12), dans lequel il y a un contrôleur d'admission de connexion (70), une unité de contrôle (70) et un ordonnanceur (80), et des moyens pour spécifier au moins une qualité de descripteur de service spécifique à un appel de demande, le contrôleur d'admission de connexion (70) étant agencé pour recevoir l'appel de demande seulement quand la qualité de service dans le descripteur peut être fournie, **caractérisé en ce que** chaque qualité de descripteur de service comprend un descripteur de dégradation de service (SDD) qui spécifie les limites acceptables dans la dégradation de la qualité de service, et **en ce que** le contrôleur d'admission de connexion (70) est opérationnel pour prévoir si le fait d'établir la connexion d'appel apporterait une dégradation de la qualité service des appels existants dans les limites définies par les descripteurs de dégradation de service (SDD) des appels existants et pour établir cette connexion d'appel si la dégradation des appels existants dans les limites est prévue.

**6.** Réseau selon la revendication 5 dans lequel le contrôleur d'admission de connexion (70) comprend un décideur Booléen (88) et un évaluateur d'impact de connexion (86) agencé pour évaluer l'impact de réception d'un appel de demande dans une cellule de télécommunication active.

## FIG. 1

## FIG. 3

## FIG. 4

| JITTER | 10ms | 20ms | BER | $10^{-5}$ | $10^{-3}$ |
|--------|------|------|-----|-----------|-----------|

*FIG. 2*

←————— UMTS —————→

TE | MT | UTRAN | EDGE NODE | CN GATEWAY | TE

END-TO-END SERVICE — 30

LOCAL BEARER SERVICE — 32

UMTS BEARER — 34

EXTERNAL BEARER SERVICE — 36

RADIO BEARER SERVICE — 40

CN BEARER SERVICE — 42

RADIO SERVICE BEARER — 50

Iu BEARER SERVICE — 52

BACKBONE BEARER SERVICE — 54

UTRA FDD/TDD SERVICE — 60

PHY BEARER SERVICE — 62

20 · 12 · 22 · 24 · 26 · 28

EP 1 154 663 B1

## FIG. 5

## FIG. 6

| connection | SDD | SSD | BW |
|------------|-----|-----|-----|
| i | 4 | 3 | X |
| j | 0 | 5 | Y |
| k | 3 | 3 | Z |

## FIG. 7

CONNECTION STATUS TABLES

SYSTEM RESOURCES FROM RRM

CR → CIE — 86

PROBABILITY VALUES
(impact on all existing connections):
$P_B, P_d, P_b, P_1$ and $P_i$

BDM — 88 → ACCEPT/REJECT

70

Link Congestion Metrics:
$N_1, N_2$ and $N_3$

EP 1 154 663 B1

## FIG. 8

LINK CONGESTION
METRICS
$N_1, N_2$ AND $N_3$

88

BDM

82

RRM

100

ARE
SYSTEM RESOURCES
AVAILABLE
?

YES
(CONNECT)

NO

102 — CHECK SDD

104

DEGRADING
OTHER CONNECTIONS
TO ACCEPT
CR ?

YES
(CONNECT)

86

CONNECTION
STATUS TABLES

CIE

QoS
DEGRADATION
PROBABILITY
VALUES

CONNECTION
BLOCKING
PROBABILITY
VALUES

NO

106

CHECK CR's LOSS
PROFILE

108

SERVE
THIS CR ACCORDING
TO ITS LOSS
PROFILE
?

YES
(CONNECT)

NO

110 — CHECK SSD

70

112

BLOCK
OTHER CONNECTIONS
TO ACCEPT
CR ?

YES
(CONNECT)

NO

REJECT AND INFORM THE APPLICATION
WHAT THE NETWORK IS ABLE TO ACCEPT

## FIG. 9

FLOW QUEUE$_i$   FLOW QUEUE$_j$   FLOW QUEUE$_k$

81   $CR_i$ 83   $CR_j$   $CR_k$

RLC

85   ARQ

74   ON-DEMAND RLC SEGMENTATION

RETRANSMISSION

82

80   SCHEDULER   TFC   RRM

PHYSICAL LAYER   TF

84   RCL PDUs OR ARQs

## FIG. 10

84   84
RLC PDU   $t_{inter}$   $T_{inter}$

PACKET $i$   PACKET $i+1$

CONNECTION $i$

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- CONNECTION ADMISSION CONTROL FOR MO-BILE MULTIPLE-CLASS PERSONAL COMMUNI-CATIONS NETWORKS. **CHAO C -C et al.** IEEE JOURNAL ON SELECTED AREAS IN COMMUNI-CATIONS. IEEE INC, 01 October 1997, vol. 15, 1618-1626

- **S SINGH.** *Quality of Service Guarantees in Mobile Computing, Computer Communications,* 1996, vol. 19, 359-371